(19) Europäisches Patentamt
European Patent Office
Office européen des brevets

(11) Veröffentlichungsnummer: **0 501 196 B1**

(12) **EUROPÄISCHE PATENTSCHRIFT**

(45) Veröffentlichungstag der Patentschrift: **07.09.94**

(51) Int. Cl.⁵: **B23F 9/10**, B23F 9/02, B23F 23/00, G05B 19/18

(21) Anmeldenummer: **92101962.6**

(22) Anmeldetag: **06.02.92**

(54) **Vollautomitische Verzahnmaschine zum Herstellen von bogenverzahnten Zahnrädern und Verfahren zum Betreiben der Verzahnmaschine.**

(30) Priorität: **01.03.91 CH 632/91**

(43) Veröffentlichungstag der Anmeldung:
**02.09.92 Patentblatt 92/36**

(45) Bekanntmachung des Hinweises auf die Patenterteilung:
**07.09.94 Patentblatt 94/36**

(84) Benannte Vertragsstaaten:
**BE CH DE FR GB IT LI SE**

(56) Entgegenhaltungen:
EP-A- 0 355 318        WO-A-87/07551
WO-A-89/01838        DE-A- 3 643 967
DE-A- 3 805 360        DE-A- 3 805 665

G.SPUR et al. (Hrsg.) 'Handbuch der Fertigunstechnik', Bd. 3/2, 'Spanen',veröffentlicht 1980, von Carl Hanser Verlag (München (DE) usw.)

WERKSTATT UND BETRIEB. Bd. 122, Nr. 3, März 1989, MUNCHEN DE Seiten 237 - 241;T.J. KRENZER ET AL.: 'Universelle Kegelrad- und Hypoid-Wälzfräsmaschine'

SOVIET ENGINEERING RESEARCH. Bd. 4, Nr. 4, 1984, MELTON MOWBRAY GB Seiten 52 -53; Y.I. EVSTEGNEEV ET AL.: 'NC Machine for Cutting Spiral Bevel Gears'

(73) Patentinhaber: **Oerlikon Geartec AG**
**Birchstrasse 155**
**CH-8050 Zürich (CH)**

(72) Erfinder: **Stadtfeld, Hermann, Dr.**
**Altmoosstrasse 21**
**CH-8157 Dielsdorf (CH)**
Erfinder: **Knaden, Manfred**
**Neudorfstrasse 11**
**CH-8050 Zürich (CH)**
Erfinder: **Brandner, Gerhard, Dr.**
**Arno-Holz-Strasse 6**
**O-9063 Chemnitz (DE)**

(74) Vertreter: **Hunziker, Kurt**
**Oerlikon-Contraves AG**
**Patentabteilung**
**Birchstrasse 155**
**CH-8050 Zürich (CH)**

EP 0 501 196 B1

**Beschreibung**

Die Erfindung bezieht sich auf ein Verfahren zum Herstellen von bogenverzahnten Zahnrädern, insbesondere für Hypoidgetriebe, nach dem Oberbegriff des Anspruchs 1.

Es sind konventionelle Verzahnmaschinen zum Herstellen von Zahnrädern mit kreisbogen- bzw. zykloidenförmigen Zähnen für Kegel- oder Hypoidgetriebe nach einem Einzelteilverfahren bzw. kontinuierlichen Teilverfahren bekannt, beispielsweise aus dem "Handbuch der Fertigungstechnik", Band 3/2, 1980, Carl Hanser Verlag München, Seiten 442 - 446, bei denen die Werkstückspindel synchron zur Werkzeugspindel sowie die Wälzbewegung über Zahnradgetriebe angetrieben werden. Eine Steuerung kontrolliert Eilgang und Vorschub eines Wälzstockes in den Arbeitsphasen. Im Wälzstock ist eine Wälztrommel gelagert, in der sich zusätzlich ein Querschlitten befindet und in diesem wiederum eine gegebenenfalls begrenzt schwenkbare (z.B. 3°) Werkzeugspindel. Weiter ist zusätzlich ein vertikal verschiebbarer Hypoidschlitten an einem Werkstückspindelstock angeordnet, welcher horizontal verschiebbar auf einem verschwenkbaren Schwenktisch gelagert ist. Alle Maschinenachsen, ausser den beiden Drehspindeln, dem Wälzstock und der Wälztrommel, sind manuell einstellbar und anschliessend blockierbar. Solche Maschinen erfüllen aber die modernen Leistungsanforderungen nicht mehr.

Neuere Verzahnmaschinen ermöglichen das vollautomatische spanende Bearbeiten mit Hilfe von Stirnmesserkopfen nach einem kontinuierlichen Teilverfahren oder Einzelteilverfahren. Geeignete Schleifwerkzeuge sind auch einsetzbar.

In der den nächstkommenden Stand der Technik zeigenden EP-A-0 355 318 ist eine solche Verzahnmaschine beschrieben. Die in einem Wälzstock drehbar gelagerte, motorisch angetriebene Wälztrommel enthält jedoch zusätzlich drei weitere je drehbar gelagerte Einstell-Trommeln, nämlich eine Exzenter-, Orientierungs- und Neigungstrommel. Vor dem Verzahnungsprozess sind diese Einstelltrommeln derart einzustellen, dass der in diesen Trommeln drehbar gelagerte Messerkopf als Werkzeug die gewünschte Stellung zum Schneiden eines Zahnrades einnimmt und ferner sind zusätzlich noch der Schwenktisch um die vertikale Schwenkachse, der Werkstückspindelstock radial zur Schwenkachse und zusätzlich ein vertikal verschiebbarer Schlitten (Hypoidstock) einzustellen. Alle diese Einstellungen sind durch eine elektronische Steuervorrichtung automatisch einstellbar und fixierbar. Sowohl das Einstellen wie auch der Verzahnungsprozess wird mit Hilfe einer in der Steuervorrichtung eingesetzten Diskette automatisch durchgeführt. Die für die Messerkopfneigung benötigten drei zusätzlichen Trommeln führen aber zu aufwendigen, teuren und mit Steifigkeitsproblemen behafteten Lösungen.

Aus der DE-A-3 643 967 und WO-A-89/01838 sind Verzahnmaschinen zum gleichen Zweck bekanntgeworden, welche weniger bewegbare Maschinenachsen und insbesondere keine Wälztrommel aufweisen. Es sind drei zueinander rechtwinklig angeordnete Maschinenachsen, eine Schwenkachse und zwei Maschinenspindeln vorgesehen. Die Wälzbewegung wird durch mindestens zwei und der Achsversatz (Hypoid) durch mindestens eine der rechtwinkligen Maschinenachsen erzeugt. Ferner ist keine Neigungseinrichtung für die Messerkopfspindel vorgesehen. Mit Steuermitteln und entsprechend geregelten Antriebsmitteln für diese Maschinenachsen und Spindeln wird die Automatisierung aller Vorgänge erzielt. Alle Verzahnverfahren und Einstellmöglichkeiten konventioneller Maschinen sind somit zu realisieren und werden als bekannt vorausgesetzt, insbesondere auch das kinematische Äquivalent zur Messerkopfneigung, gemäss SU 230 614 oder WO-A-89101838, sowie Korrekturen der Flankenlängsform, im Einzelflankenschnitt, im Zweiflankenschnitt etc. Beim Wälzverzahnungsprozess treten aber wegen der Anordnung der Achsen sowie den daraus resultierenden stark nicht-linearen Bewegungsabläufen, kinematische Stabilitätsprobleme auf.

Die Erfindung, wie sie durch die kennzeichnenden Merkmale des Anspruchs 1 beansprucht ist, löst die Aufgabe, ein Verfahren aufzuzeigen, mit dem der Einsatz einer vollautomatischen Verzahnmaschine mit einem Minimum an bewegbaren Konstruktionsteilen für einen besonders steifen Aufbau ermöglicht wird und dabei die Herstellung von Zahnrädern, insbesondere für Hypoidgetriebe, ungeschmälert erhalten bleibt.

Die durch das erfindungsgemässe Verfahren erreichten Vorteile sind im wesentlichen darin zu sehen, dass die Verzahnmaschine keinen Hypoidstock benötigt und dass alle Maschinenachsen "natürliche" Verzahnungsachsen und auch verzahnungstheoretisch relevante Achsen sind, wodurch die verknüpften Bewegungsabläufe einfach und nahezu linear und die Geschwindigkeiten klein werden. Vorzugsweise schneiden sich die Achsen der Werkstückspindel, des Schwenktisches und der Wälztrommel in einem Punkt. Weiter kann die Exzentereinstellung an der Wälztrommel während des Verzahnungsprozesses konstant gehalten werden. Es resultieren daraus sehr gute mechanische wie auch kinematische Stabilitäten.

Ein Ausführungsbeispiel der Erfindung wird im folgenden anhand von Zeichnungen näher erläutert, zuerst die zur Durchführung des erfindungsgemässen Verfahrens benötigte Verzahnmaschine und dann anschliessend das Verfahren. Es zeigt:

Fig.1　　eine perspektivische Darstellung einer Kegelradverzahnmaschine,

Fig.2　　eine schematische Darstellung verschiedener, beim Schneiden eines Hypoidrades wichtiger geometrischer Grössen, frontal zu einer Wälztrommel,

Fig.3　　teilweise die Darstellung von Fig.2 im Grundriss,

Fig.4　　Bewegungsabläufe von Maschinenachsen bei einem Wälzprozess für ein Hypoidrad,

Fig.5　　wie Fig.4 mit zusätzlichen Neigungseinstellungen.

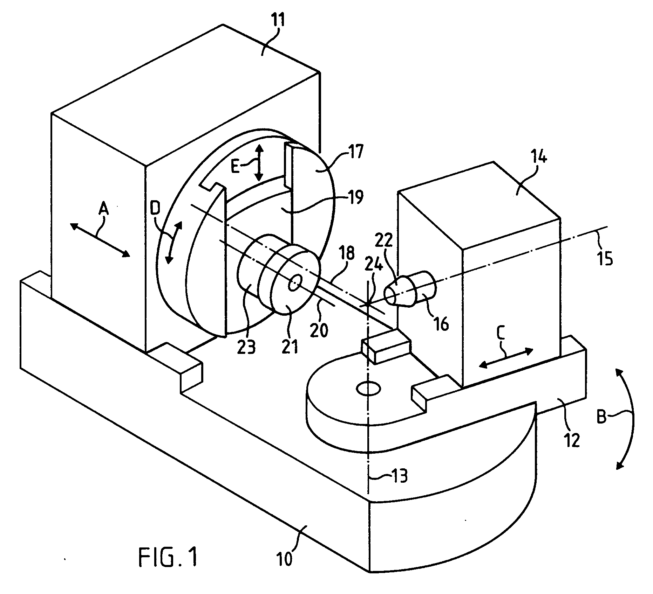

Gemäss Fig 1 ist auf einem Maschinenbett 10 einerseits ein Wälzstock 11 in Richtung des Doppelpfeiles A verschiebbar gelagert und andererseits ein Schwenktisch 12 um eine Schwenkachse 13, welche das sogenannte Bettmittel darstellt, in Richtung des Doppelpfeiles B verschwenkbar gelagert. Auf dem Schwenktisch 12 ist ein Spindelstock 14 in Richtung des Doppelpfeiles C verschiebbar gelagert und in diesem befindet sich eine Werkstückspindel 16, die um eine Achse 15 drehbar ist. Auf dem Wälzstock 11 ist eine Wälztrommel 17 um eine Wälzachse 18 drehbar gelagert. In der Wälztrommel 17 ist ein Exzenterschieber 19 verschiebbar geführt. Darin angeordnet ist eine um eine Achse 20 drehbar gelagerte Werkzeugspindel 23, an welcher ein Werkzeug 21, beispielsweise ein Messerkopf zum Schneiden eines Werkstückes 22 befestigt ist. Die Werkstückspindel 16 ist ortsfest im Spindelstock 14 derart angeordnet, dass die Achse 15 in einem Punkt 24 die sich dort schneidenden Wälzachse 18 und Schwenkachse 13 ebenfalls schneidet.

Das Werkstück 22 ist an der Werkstückspindel 16 in üblicher, hier nicht dargestellter Weise mit Hilfe einer automatischen Spannvorrichtung befestigt. Die Werkstückspindel 16 und die Werkzeugspindel 23 sind von stufenlos drehzahleinstellbaren Antrieben betätigt und deren Kopplung erfolgt über ein steifes elektronisches Getriebe und durch eine Regelelektronik eines Steuerungscomputers. Weitere geregelte Antriebe sind für die Verschiebung des Wälzstockes 11, die Drehung der Wälztrommel 17, die zur Schwenkachse 13 radiale Verschiebung des Spindelstockes 14 und zur Verschwenkung des Schwenktisches 12 vorgesehen. Ferner ist ein gesteuerter Stellantrieb für die Verschiebung des Exzenterschiebers 19 in eine bestimmbare Exzenterposition vorgesehen. Alle diese in der Verzahnmaschine integrierten Antriebe sowie das elektronische Getriebe sind an sich bekannt und daher in der Zeichnung nicht dargestellt. Ebenfalls nicht dargestellt ist ein elektrischer Steuerschrank mit dem Steuerungscomputer, welcher in an sich bekannter Art neben der Verzahnmaschine angeordnet ist, wobei insbesondere mit Hilfe des Steuerungscomputers sowohl beim Einstellen wie auch im Verzahnungsprozess die Maschinenachsen A bis E und die beiden Maschinenspindeln automatisch eingestellt und geregelt werden, d.h. die Richtungen A bis E sind auch als Maschinenachsen A bis E zu verstehen.

Als Werkzeug 21 kann auch ein Schleifwerkzeug, beispielsweise eine Topfschleifscheibe für ein Einzelteilverfahren, verwendet werden.

Im Gegensatz zu dem in der Beschreibungseinleitung genannten Stand der Technik weist die Verzahnmaschine keinen Hypoidstock oder mindestens eine Maschinenachse zur Einstellung eines Achsversatzes auf. Für das Herstellen von gewälzten Hypoidrädern muss aber das Werkzeug, beispielsweise ein Messerkopf zum Schneiden von entsprechenden Zahnlücken, eine Wälzbewegung um ein achsversetztes Erzeugerrad ausführen. Da nun die üblichen Hypoideinstellmittel fehlen, wird nun erfindungsgemäss während dem Wälzvorgang das Werkstück selbst zusätzlich in axialer Richtung bewegt.

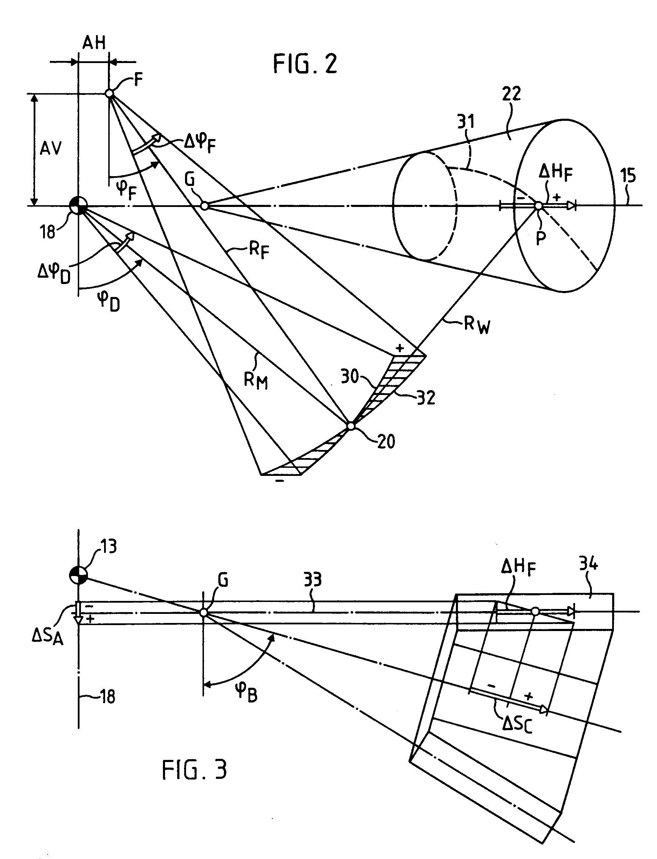

Das kinematische Äquivalent zum üblichen Achsversatz mit Hypoidstock und Wälztrommel wird nun mit Hilfe der Figuren 1, 2 und 3 erläutert. Der Messerkopf 21 wird durch den Exzenterschieber 19 auf der Wälztrommel 17 in eine feste Exzenterposition mit Radius $R_M$ gebracht, wobei gemäss Fig.2 die Achse 20 und die Wälzachse 18 senkrecht zur Zeichnungsebene und parallel zueinander stehen. Bei der Drehung der Wälztrommel 17 um einen Winkel $\Delta\phi_D$ um die Wälzachse 18 wird die Achse 20, auch als Messerkopfachse 20 bezeichnet, entlang der Linie 30 kreisförmig bewegt. Auf der Achse 15, auch als Werkstückachse 15 bezeichnet, ist ein Werkstück 22 mit einer Kegelspitze G angeordnet. Mit auf dem Messerkopf 21 angeordneten, nicht dargestellten Messern sollen nun Zahnlücken am Werkstück 22 nach bekannter Art mit einem Wälzverfahren geschnitten werden, was durch eine Teillinie 31, einen Berechnungspunkt P und einem Messerradius $R_W$ angedeutet ist. Es soll nun aber ein Hypoidrad mit einem Achsversatz AV und einem fiktiven Drehpunkt F geschnitten werden. Der Messerkopf 21 müsste somit mit einem Radius $R_F$ um einen Winkel $\Delta\phi_F$ um den Drehpunkt F entlang einer Linie 32 gewälzt werden. Die Kompensation zwischen den Linien 30 und 32 wird nun erfindungsgemäss durch eine zusätzliche Längsbewegung $\Delta H_F$ des Werkstückes 22 in Richtung des Zahnteilkegels 33 der zu schneidenden Zahnflanke 34 beim Drehen der Wälztrommel 17 erzielt. Mit anderen Worten, um bei einem Wälzvorgang zum Schneiden eines Hypoidrades korrekte kinematische Verhältnisse zu erreichen, ist auf diese Verzahnmaschine zusätzlich das Werkstück 22 relativ zum Messerkopf 21 während des Wälzprozesses in der oben beschriebenen Art zu bewegen. Bei den zum Stand der Technik aufgeführten Verzahnmaschinen bleibt das Werkstück beim Wälzprozess ortsfest, d.h. es dreht sich nur um den bekannten Differentialanteil um seine Achse.

Die notwendige zusätzliche Längsbewegung $\Delta H_F$ wird maschinenmässig durch Zusatzbewegungen $\Delta S_A$ und $\Delta S_C$ der geregelten Maschinenachsen A und C, d.h. des Wälzstockes 11 und des Spindelstockes 14 realisiert, siehe Fig.3. Über die Beziehungen

$$V (\Delta\phi_F) = R_F \cdot \cos (\phi_F + \Delta\phi_F) = R_M \cdot \cos (\phi_D + \Delta\phi_D) + AV$$
$$H (\Delta\phi_F) = R_F \cdot \sin (\phi_F + \Delta\phi_F) = R_M \cdot \sin (\phi_D + \Delta\phi_D) - AH + \Delta H_F$$

ist zu den vorgegebenen Grössen $R_F$ und AV und den geeignet gewählten Grössen $R_M$ und AH ein eindeutiger Zusammenhang zwischen dem fiktiven Wälzwinkel $\Delta\phi_F$ und den abhängigen Grössen $\phi_D$ und $\Delta H_F$ gegeben. Über die Beziehungen

$$\Delta S_C = H_F / \sin \phi_B$$
$$\Delta S_A = H_F / \tan \phi_B$$

sind die Zusatzbewegungen $\Delta S_A$ und $\Delta S_C$ der geregelten Maschinenachsen A und C zu realisieren.

Aus diesen aufgeführten Beziehungen werden bei der Verzahnungsauslegung Übertragungsfunktionen für den Steuerungscomputer abgeleitet.

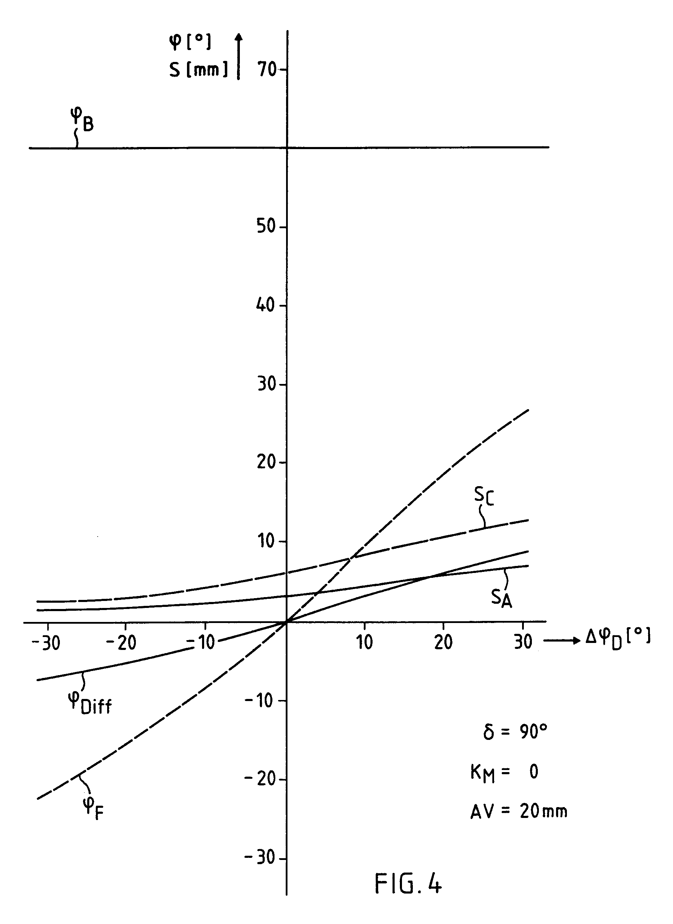

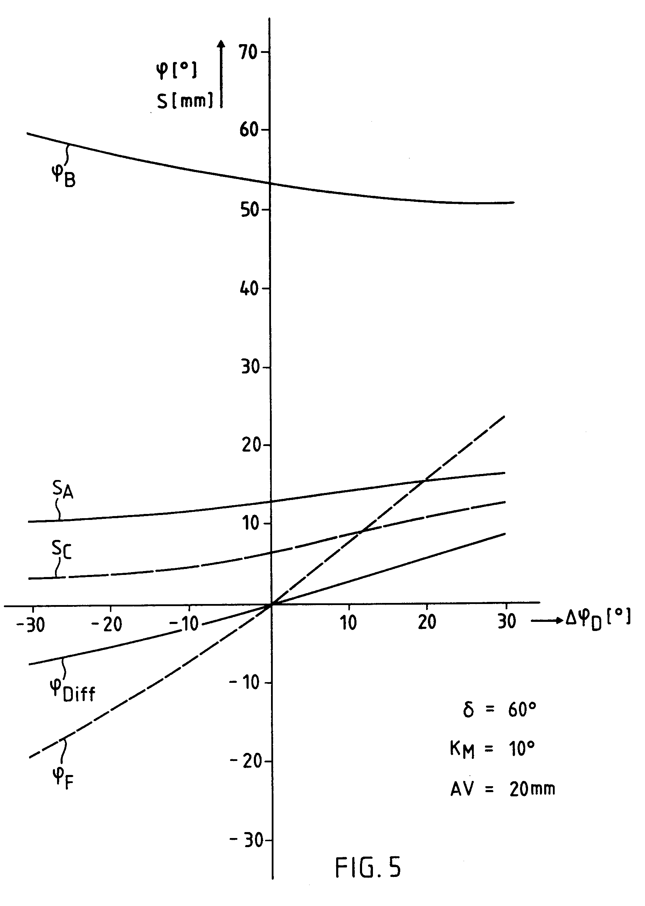

Durch die wählbare Voreinstellung des Exzenters 19 für den Radius $R_M$ ist eine optimale Aufteilung zwischen der Drehbewegung $\phi_D$ der Wälztrommel 17 und der zusätzlichen Längsbewegung $\Delta H_F$ möglich, so dass im Wälzbereich keine Bewegungsumkehrungen auftreten und die Übertragungsfunktionen nahezu linear werden sowie die Steuerungsgeschwindigkeiten klein sind. Dies geht aus den für sich selbst sprechenden Fig.4 und 5 hervor, welche den Bewegungsablauf der Maschinenachsen A, B, C, D, inklusive die notwendigen zusätzlichen Bewegungen und die bekannte überlagerte Differentialbewegung $\phi_{Diff}$ der Werkstückspindel 16 in Abhängigkeit der Wälztrommeldrehung $\phi_D$ aufzeigen. Die beiden Figuren beziehen sich dabei auf den Bewegungsablauf für die angegebenen Werte von Achsversatz AV, Messerkopfneigung $K_M$ und Teilkegelwinkel $\delta$ des Erzeugerrades, d.h. Fig.4 ohne und Fig.5 mit Messerkopfneigung sowie mit Erzeugerplanrad bzw. Erzeugergegenrad.

Da der fiktive Drehpunkt F des Erzeugerrades keinem bestimmten Maschinenbauteil zugeordnet ist, ist jede beliebige Position innerhalb und auch ausserhalb der Verzahnmaschine realisierbar. Somit sind auch Kegelräder mit grosser Kegellänge bis hin zu Stirnrädern problemlos herstellbar. Aufgrund der an sich koaxialen Anordnung von Maschinenachse C und Werkstückspindelachse 15 stellen auch unterschiedliche Werkstücklängen kein Hindernis dar. Weiter sind sowohl Einzelteilverfahren wie auch kontinuierliche Teilverfahren zum Schneiden mit einem Messerkopf wie auch Einzelteilverfahren zum Schleifen mit einer Topfscheibe auf der Verzahnmaschine durchführbar. Ferner ist es an sich nicht erforderlich, dass die Achse 15, die Wälzachse 18 und/oder die Schwenkachse 13 sich schneiden, weil entsprechend ausgleichende Zusatzbewegungen auch durch das Steuerprogramm zu realisieren wären.

## Patentansprüche

1.  Verfahren zum Herstellen von bogenverzahnten Zahnrädern, insbesondere für Hypoidgetriebe, nach einem Form- oder Wälzverzahnungsprozess auf einer vollautomatischen Verzahnmaschine, enthaltend
    - ein Maschinenbett (10),
    - einen auf dem Maschinenbett (10) um eine Schwenkachse (13) verschwenkbar angeordneten Schwenktisch (12) mit einem darauf radial zur Schwenkachse (13) verschiebbaren Spindelstock (14), welcher eine ortsfeste Werkstückspindel (16) mit Achse (15) aufweist,
    - einen auf dem Maschinenbett (10) angeordneten Wälzstock (11) mit einer darin um eine Wälzachse (18) drehbaren Wälztrommel (17),
    - einen stirnseitig an der Wälztrommel (17) angeordneten, verschiebbar geführten Exzenterschieber (19) und in diesem eine Werkzeugspindel (23) mit zur Wälzachse (18) parallelen Achse (20),
    wobei durch Integration von gesteuerten und geregelten Antrieben, einem elektronischen Getriebe und einem Steuerungscomputer alle Maschinenachsen (A, B, C, D und E) und Maschinenspindeln (16, 23) beim Einstellen und im Prozess kontrolliert werden und wobei an der Werkzeugspindel (23) ein Werkzeug (21) und an der Werkstückspindel (16) ein Werkstück (22) angeordnet sind, dadurch gekennzeichnet, dass zusätzlich
    - die Achse (20) der Werkzeugspindel (23) durch den Exzenterschieber (19) auf der Wälztrommel (17) in einer vorbestimmten Position zur Wälzachse (18) fest eingestellt wird und
    - in Abhängigkeit der Drehung der Wälztrommel (17) um die Wälzachse (18) eine Bewegung ($\Delta H_F$) des Werkstückes (22) in Richtung des Zahnteilkegels (33) erfolgt, derart, dass die Achse (20) der Werkzeugspindel (23) eine resultierende Drehbewegung (32) um eine fiktive Drehachse (F) eines imaginären Erzeugerrades mit konstantem Radius ($R_F$) beschreibt.

2. Verfahren nach Anspruch 1, dadurch gekennzeichnet, dass die Bewegung ($\Delta H_F$) durch eine überlagerte Bewegung ($\Delta S_A$ der Maschinenachse (A) des Wälzstockes (11) und eine Bewegung ($\Delta S_C$) der Maschinenachse (C) des Spindelstockes (14) realisiert wird.

## Claims

1. Process for producing curved-tooth gears, in particular for hypoid gearings, in a forming or roller gearing process on a fully automatic gear-cutting machine, comprising
   - a machine base (10),
   - a pivot table (12), which is arranged to be pivotable around a pivot axis (13) on the machine base (10), with a spindle stock (14) which is displaceable thereon radially to the pivot axis (13) and which comprises a fixed workpiece spindle (16) with axis (15);
   - a roller stock (11) arranged on the machine base (10) and with a roller drum (17) which is rotatable therein around a roller axis (18);
   - a displaceably guided eccenter slide (19) arranged at the end on the roller drum (17), and therein a tool spindle (23) the axis (20) of which is parallel to the roller axis (18);

   and that all machine axes (A, B, C, D and E) and machine spindles (16, 23) are controlled during setting and processing by way of integration of controlled and regulated drives, an electronic gearing and a control computer, and that a tool (21) is arranged on the tool spindle (23), and a workpiece (22) is arranged on the workpiece spindle 16, **characterised in that** additionally
   - the axis (20) of the tool spindle (23) is fixed by the eccenter slide (19) on the roller drum (17) in a preset position relative to the roller axis (18); and
   - a movement ($\Delta H_F$) of the workplace (22) is carried out in dependence on the rotation of the roller drum (17) around the roller axis (18) in the direction of the sectional tooth bevel (33), so that the axis (20) of the tool spindle (23) describes a resulting rotary movement (32) around a fictitious rotational axis (F) of an imaginary producing wheel with constant radius ($R_F$).

2. Process according to claim 1, **characterised in that** the movement ($\Delta H_F$) is realised by a superimposed movement ($\Delta S_A$) of the machine axis (A) of the roller stock (11) and a movement ($\Delta S_C$) of the machine axis (C) of the spindle stock (14).

## Revendications

1. Procédé de fabrication de roues dentées à denture courbe, notamment pour des engrenages hypoïdes, selon un procédé de taille par développante sur une machine totalement automatique de taillage d'engrenage, comprenant :
   - un plateau de machine (10),
   - une table basculante (12) montée basculante autour d'un axe de basculement (13) sur le plateau (10) de la machine et portant une poupée (14) coulissant sur la table, radialement par rapport à l'axe de basculement (13), cette poupée ayant une broche porte pièce (16), fixe avec un axe (15),
   - une poupée à mouvement en développante (11) montée sur le plateau (10) de la machine et ayant un tambour à mouvement en développante (17) tournant autour d'un axe primitif (18),
   - un coulisseau excentrigue (19) guidé de manière coulissante sur la face frontale du tambour à mouvement en développante (17) et ayant une broche porte outil (23) d'axe (20) parallèle à l'axe primitif (18),

   dans lesquels par intégration de moyens d'entraînement commandés et régulés, d'une transmission électronique et d'un ordinateur de commande, tous les axes de machine (A, B, C, D, E) et broches de machine (16, 23) sont réglés et contrôlés dans le procédé et la broche porte outil (23) comporte un outil (21) et la broche porte pièce (16) porte une pièce (22), procédé caractérisé en ce qu'en outre :
   - l'axe (20) de la broche porte outil (23) se règle de manière fixe dans une position prédéterminée par rapport à l'axe primitif (18), par le coulisseau excentrique (19) sur le tambour à mouvement en développante (17),
   - en fonction de la rotation du tambour à mouvement en développante (17) autour de l'axe primitif (18) on a un mouvement ($\Delta H_F$) de la pièce (23) en direction du cône primitif (33) des dents de façon que l'axe (20) de la broche porte outil (23) exécute un mouvement de rotation résultant (32) autour d'un axe de rotation fictif (F) d'une roue génératrice imaginaire de rayon constant ($R_F$).

2. Procédé selon la revendication 1, caractérisé en ce que le mouvement ($\Delta H_F$) est effectué par un mouvement combiné ($\Delta S_A$) de l'axe de la machine (A) de la poupée à mouvement en développante (11) et un mouvement ($\Delta S_C$) de l'axe de machine (C) de la poupée (14).

FIG.1

FIG. 2

FIG. 3

FIG.4

FIG. 5

$\delta = 60°$

$K_M = 10°$

$AV = 20mm$